**Europäisches Patentamt**

**European Patent Office**

**Office européen des brevets**

(11) Numéro de publication: **0 328 555 B1**

(12) **FASCICULE DE BREVET EUROPEEN**

(45) Date de publication du fascicule du brevet: **30.01.91**

(21) Numéro de dépôt: **87907774.1**

(22) Date de dépôt: **18.11.87**

(86) Numéro de dépôt international:
**PCT/FR87/00454**

(87) Numéro de publication internationale:
**WO 88/03831 02.06.88 Gazette 88/12**

(51) Int. Cl.⁵: **B 01 D 17/02**

(54) **PROCEDE ET DISPOSITIF DE SEPARATION D'UNE PHASE DISPERSEE.**

(30) Priorité: **28.11.86 FR 8616784**

(43) Date de publication de la demande:
**23.08.89 Bulletin 89/34**

(45) Mention de la délivrance du brevet:
**30.01.91 Bulletin 91/05**

(84) Etats contractants désignés:
**DE FR**

(56) Documents cités:
**BE-A- 643 389**
**FR-A- 859 029**
**GB-A-2 161 395**
**US-A-2 001 809**
**US-A-3 694 355**
**US-A-3 810 832**

(73) Titulaire: **INSTITUT NATIONAL DES SCIENCES APPLIQUEES DE TOULOUSE (I.N.S.A.T.)**
**Avenue de Rangueil**
**F-31077 Toulouse Cédex (FR)**

(72) Inventeur: **ROQUES, Henri**
**6, rue Renoir**
**F-31120 Portet-sur-Garonne (FR)**
Inventeur: **AURELLE, Yves**
**113, route de Fronton**
**F-31140 Aucamville (FR)**
Inventeur: **LOPEZ, Louis**
**21, rue de l'Ariège Roquettes**
**F-31120 Portet-sur-Garonne (FR)**

(74) Mandataire: **Barre, Philippe**
**Cabinet Barre-Gatti-Laforgue 95 rue des Amidonniers**
**F-31069 Toulouse Cédex (FR)**

Courier Press, Leamington Spa, England.

## Description

L'invention concerne un procédé de séparation d'une phase dispersée en émulsion ou en suspension dans une phase continue de densité différente; elle s'étend à un dispositif de séparation pour la mise en oeuvre du procédé et s'applique en particulier, mais non exclusivement, à la séparation d'hydrocarbures ou de corps gras dispersés dans un effluent aqueux.

Le pétrole brut récupéré sur les plates-formes "off shore" contient toujours des quantités d'eau relativement importantes et un pourcentage non négligeable de matières en suspension (matières colloïdales, fines particules); la séparation de l'hydrocarbure et de l'eau doit être réalisée aussitôt que possible afin, en premier lieu, de rejeter à la mer une phase aqueuse épurée sans créer de nuisance et, d'autre part, d'assurer le pompage d'une phase hydrocarbure exempte d'eau de façon à éviter des gaspillages d'énergie et à réduire les phénomènes de corrosion sur les canalisations auxquels conduit la présence d'eau salée. Le problème se pose de façon identique sur les plates-formes productrices de gaz où la fraction de liquide remontée est composée d'hydrocarbures légers mélangés avec de l'eau salée.

Il est donc nécessaire d'atteindre une grande efficacité de séparation, et l'on considère comme satisfaisante dans ces applications une séparation permettant d'obtenir dans une phase moins de 100 mg/l (milligrammes par litre) de l'autre phase.

Actuellement, compte-tenu des matières en suspension que contiennent les effluents, ces performances sont généralement obtenues par un double traitement s'effectuant en deux étapes successives, dans des installations séparées: un traitement primaire essentiellement réalisé dans des décanteurs, qui permet la séparation des gouttelettes de taille supérieure à 150 microns, et un traitement secondaire généralement réalisé dans des flottateurs à air induit, qui sépare les gouttelettes de tailles plus petites et réduit la teneur résiduelle en phase dispersée à une valeur inférieure à 100 mg/l.

Ces installations présentent le grave inconvénient d'être très encombrantes, d'une part, en raison du double traitement à effectuer, d'autre part, du fait que chaque phase du traitement nécessite en elle-même un appareillage volumineux: décanteurs dont les performances sont liées à la surface, flottateurs lourds et volumineux. Ce défaut est particulièrement grave pour des dispositifs destinés à équiper des plates-formes, où la place est limitée et coûteuse. De plus, les flottateurs à air induit sont de gros consommateurs d'énergie et nécessitent l'emploi d'adjuvants chimiques (désémulsifiants, coagulants) pour neutraliser l'action stabilisatrice des additifs qui sont généralement injectés en tête de puits (agents anti-corrosion, anti-mousse . . .).

Par ailleurs, on connaît des coalesceurs à garnissage fibreux ou granulaire, en particulier lits de résine oléophile, qui conduisent à d'excellentes performances de séparation, mais sont très sensibles aux matières en suspension et requièrent des cycles de régénération de mise en oeuvre délicate. En conséquence, ces coalesceurs à garnissage ne sont généralement pas utilisés pour des effluents très chargés de matières en suspension et nécessitent de toute façon une double installation pour travailler en continu, une installation fonctionnant en cycle de séparation pendant que l'autre travaille en cycle de régénération.

La présente invention se propose de fournir un nouveau procédé et un nouveau dispositif de séparation, par coalescence, d'une phase d'hydrocarbures en émulsion dans une phase aqueuse et vise à supprimer les défauts susévoqués des procédés et installations connus.

D'une façon plus générale, l'invention vise un procédé et un dispositif améliorés pour la séparation de toute phase dispersée en émulsion ou en suspension dans une phase continu de densité différente.

Un objectif essentiel de l'invention consiste en particulier à effectuer la séparation en une seule étape avec une efficacité de séparation supérieure à celle du double traitement traditionnel susévoqué.

Un autre objectif essentiel est de fournir un dispositif de séparation peu sensible aux matières en suspension et, en conséquence, apte à fonctionner en continu et en permanence, sans étape de régénération.

Un autre objectif est de fournir un dispositif très compact, consommant peu d'énergie.

Un autre objectif est de fournir un dispositif capable de traiter directement des effluents sans nécessité d'ajouter des additifs chimiques.

Le procédé de séparation visé par l'invention est du type consistant à amener l'émulsion à circuler dans une enceinte de coalescence contenant un garnissage à l'état divisé formé par des fibres ou particules, et à recueillir séparément la phase coalescée et la phase continue à des niveaux différents de l'enceinte; selon la présente invention, l'on utilise un garnissage a coefficient de vide elevé présentant un volume propre de particules ou fibres inférieur à environ 20% du volume utile de l'enceinte de coalescence et l'on met ledit garnissage en mouvement par rapport à l'émulsion circulant dans l'enceinte de façon que les particules ou fibres dudit garnissage balayent l'enceinte avec une vitesse moyenne supérieure à la vitesse d'écoulement de l'émulsion dans l'enceinte.

Par "volume propre de particules ou fibres", l'on entend le volume du matériau constitué par ces éléments à l'exclusion des vides intersticiels entre ceux-ci. De plus, par "volume utile de l'enceinte de coalescence", l'on extend le volume disponible pour le passage de l'émulsion à traiter, qui est balayé par les particules ou fibres du garnissage.

Les particules ou fibres du garnissage peuvent être contenues dans une matrice mobile dont le volume correspond à la totalité du volume utile de l'enceinte: dans ce cas, le coefficient de vide spécifique de ce garnissage possède une valeur élevée. Il est également possible de disposer les fibres ou particules dans une matrice mobile dont le volume est inférieur au volume utile de l'enceinte, (cette matrice balayant ledit volume utile au cours de son mouvement): dans ce cas, le coefficient de vide spécifique de la matrice peut être moins élevé.

Le garnissage est de préférence mis en mouvement dans l'enceinte de façon que la vitesse moyenne de ses particules ou fibres soit supérieure à environ 100 fois la vitesse d'écoulement de l'émulsion.

Les expérimentations effectuées sur des séparations d'hydrocarbures et d'eau ont montré que le procédé de l'invention combinait, d'une part, une remarquable efficacité de séparation permettant d'atteindre des concentrations résiduelles de phases dispersées largement inférieures à 100 mg/l, d'autre part, une très faible sensibilité à la présence de matières en suspension permettant de mettre en oeuvre le procédé en continu, sans précaution particulière.

Ces performances paraissent paradoxales, notamment en ce qui concerne l'efficacité de séparation. En effet, créer un mouvement dans un effluent au sein duquel l'on recherche un effet de coalescence est un concept qui heurte le bon sens, puisque généralement l'effet d'agitation produit un effet inverse de fractionnement des gouttes qui s'oppose à l'effet de coalescence; de plus, il est bien connu que les coalesceurs à coefficient de vide élevé ont des performances de séparation médiocres ne permettant, en aucun cas, d'atteindre les normes de rejet recherchées.

Les performances du procédé de l'invention, a priori inattendues, paraissent pouvoir s'expliquer de la façon suivante. Le mouvement relatif de vitesse élevée des particules ou fibres par rapport à l'émulsion conduit à deux phénomènes aux effets opposés: une tendance au refractionnement sus-évoqué, et une forte augmentation de la probabilité de rencontre des gouttes, soit entre elles, soit avec les fibres ou particules, ce dernier phénomène tendant à renforcer l'effet de coalescence. Lorsque la vitesse des fibres ou particules par rapport à l'émulsion est élevée, l'on a pu constater que l'effet de coalescence l'emportait de très loin sur la tendance au refractionnement, ce qui explique les performances globales remarquables obtenues.

Ainsi, le procédé de l'invention permet, au moyen de garnissages à coefficient de vide élevé (donc peu sensibles aux matières en suspension), de produire en une seule étape une séparation très efficace.

En pratique, pour un garnissage composé de fibres, le volume propre de fibres est de préférence ajusté entre 0,5% et 5% du volume utile de l'enceinte, lesdites fibres étant mises en mouvement à une vitesse moyenne approximativement comprise entre 150 et 300 fois la vitesse d'écoulement de l'émulsion.

Selon un mode de mise en oeuvre préféré, l'émulsion est amenée à circuler dans l'enceinte parallèlement à un axe et le mouvement du garnissage consiste en une mise en rotation de ce dernier autour de cet axe, de façon que les fibres ou particules balayent le volume utile de l'enceinte avec une vitesse tangentielle moyenne (à mi-rayon) grande par rapport à la vitesse axiale d'écoulement de l'émulsion.

L'invention s'étend à un dispositif pour la mise en oeuvre du procédé sus-évoqué. Ce dispositif est du type comprenant une enceinte de coalescence, une entrée d'émulsion située vers une extrémité de l'enceinte, une sortie de phase coalescée et une sortie de phase continue, situées vers l'extrémité opposée de l'enceinte à des niveaux différents. Conformément à la présente invention, ledit dispositif comprend un support rotatif associé à l'enceinte de coalescence, des moyens d'entraînement en rotation dudit support, et un garnissage formé par des fibres, lesdites fibres étant liées au support rotatif et agencées de façon à balayer le volume de l'enceinte au cours de la rotation de celui-ci.

Le volume propre des fibres du garnissage est avantageusement compris entre environ 0,5% et 5% du volume utile de l'enceinte.

De plus, les moyens d'entraînement sont de préférence adaptés pour permettre d'assurer une rotation du support rotatif telle que:

$$\frac{750}{D} \leqslant N \leqslant \frac{1\,500}{D}\,,$$

où N est la vitesse de rotation exprimée en tours/min. et D le diamètre moyen de l'enceinte exprimé en cm.

Ces vitesses de rotation correspondent aux vitesses moyennes tangentielles qui paraissent optimales pour obtenir un effet de coalescence très fortement prédominant par rapport à l'effet de refractionnement.

Le garnissage peut revêtir des formes de réalisation diverses: multitude de fibres radiales liées à un arbre central pour former un goupillon en forme de spirale ou une brosse linéaire, nappe de fibres tissées ou feutrées affectant la demi-section longitudinale de l'enceinte ou sa section entière...

Le diamètre des fibres utilisées est avantageusement ajusté entre 0,1 et 0,5 mm.

La description qui suit en référence aux dessins annexés, présente un mode de réalisation et des variantes du dispositif conforme à l'invention et donne des exemples mis en oeuvre au moyen de ce dispositif en vue d'illustrer le procédé de l'invention; sur ces dessins qui font partie intégrante de la présente description:

la figure 1 est une coupe par un plan vertical axial d'un dispositif conforme à l'invention,

la figure 2 est une vue schématique en perspective du garnissage équipant ce dispositif,

les figures 3, 4 et 5 sont des vues schématiques en perspective de variantes de garnissage susceptibles d'équiper ledit dispositif.

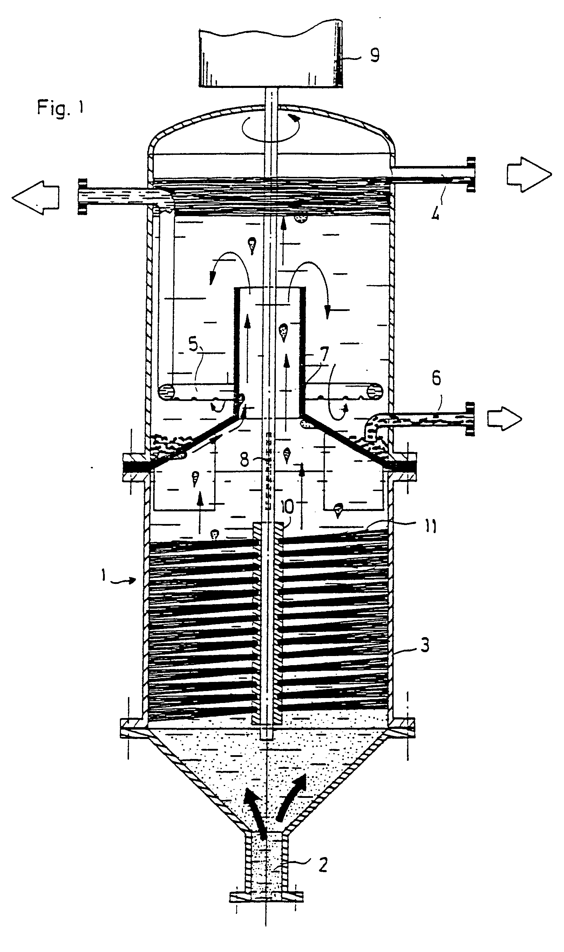

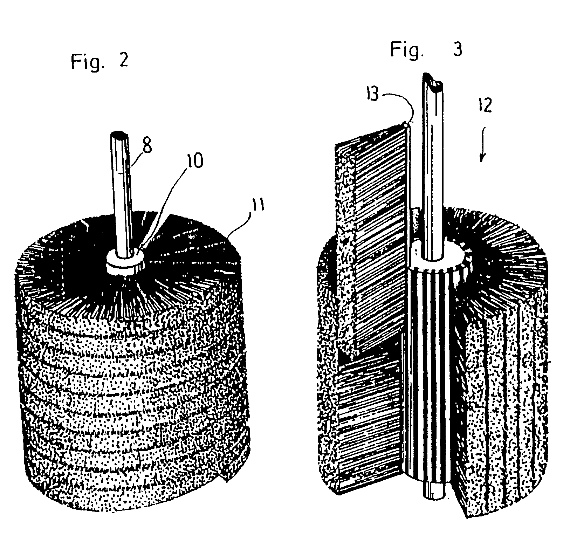

Le dispositif représenté à titre d'exemple aux figures 1 et 2 est destiné à séparer une phase dispersée notamment hydrocarbure en émulsion ou en suspension dans une phase continue de densité différente notamment aqueuse; le cas échéant, l'effluent peut contenir des matières en suspension.

Ce dispositif comprend une enceinte cylindrique de coalescence 1 d'axe vertical, formée en l'exemple de trois tronçons assujettis les uns sur les autres: un tronçon inférieur doté d'une entrée d'émulsion 2, un tronçon intermédiaire 3 délimitant un volume dit utile dans ladite enceinte, et un tronçon supérieur doté d'une sortie de phase coalescée 4 en partie haute, d'une sortie de phase continue 5 située à un niveau inférieur, et d'une sortie de matière en suspension 6 située à la base de ce tronçon supérieur. L'effluent à traiter est envoyé dans l'enceinte par l'entrée 2 avec un débit ajusté en fonction de la vitesse axiale d'écoulement désirée à l'intérieur de ladite enceinte, l'effluent circulant de bas en haut dans le volume utile de celle-ci.

En l'exemple, le tronçon intermédiaire et le tronçon supérieur sont séparés par un guide 7 possédant la forme d'un entonnoir renversé. La sortie 4 permet de recueillir par surverse la phase dispersée de plus faible densité; la sortie 5 qui possède un collecteur-circulaire perforé prolongé par un conduit d'évacuation permet de recueillir la phase continue. Les matières en suspension entraînées dans la phase continue vers le tronçon supérieur se déposent au-dessus du guide 7 et peuvent être évacuées séquentiellement ou en continu par la sortie 6.

Par ailleurs, l'enceinte 1 est munie d'un arbre rotatif vertical 8 qui s'étend le long de son axe et traverse sa paroi supérieure pour venir s'accoupler à l'arbre d'entraînement d'un moteur 9. Celui-ci peut être fixé par des pieds au-dessus de l'enceinte.

Dans les exemples décrits plus loin, l'enceinte 1 présentait un diamètre de 5 cm et le moteur 9 était un moteur électrique permettant de faire varier la vitesse de rotation de l'arbre 8 jusqu'à une valeur de l'ordre de 300 tours/minute.

Dans sa portion inférieure située au niveau du volume utile de l'enceinte, l'arbre 8 porte un manchon 10 fixé sur celui-ci, qui est pourvu d'une multitude de fibres 11 enroulées en spirale le long de l'arbre pour former un goupillon que l'on aperçoit en perspective à la figure 2. Ces fibres ont une longueur adaptée pour que leur extrémité libre vienne au contact de l'enceinte de façon à balayer au cours de la rotation le volume utile de celle-ci.

Les fibres du garnissage sont en matériau mouillé préférentiellement par la phase dispersée, en particulier polypropylène, polyéthylène, polyamide, polytétrafluoroéthylène . . ., dans le cas de la séparation hydrocarbure/eau; leur diamètre est avantageusement compris entre 0,1 et 0,5 mm.

La densité des fibres de chaque spire et le pas de la spirale sont prévus de sorte que le volume de matières rapporté au volume utile de l'enceinte soit inférieur à 20%.

Dans les exemples 4, 5 et 6 visés plus loin ce rapport était de 17%, dans l'exemple 7 il était de 13% et dans l'exemple 8 de 11%. Cette structure très aérée liée au déplacement des fibres permet au garnissage d'être très peu sensible aux matières en suspension qui le traversent sans colmatage.

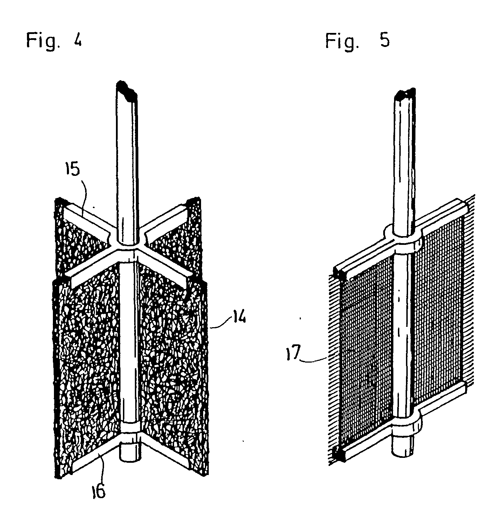

La figure 3 présente un autre mode de réalisation de garnissage 12 réalisé au moyen de fibres analogues qui sont rattachées le long d'un support linéaire 13 inséré dans une rainure du manchon central. Ces fibres forment ainsi des brosses linéaires qui s'étendent chacune le long d'une génératrice de l'arbre. Une seule brosse peut être prévue ou plusieurs, comme le montre la figure 3. La densité de chaque brosse et leur répartition autour de l'arbre sont ajustées comme précédemment de sorte que le volume de matière rapporté au volume utile soit inférieur à 20%.

La figure 4 présente une autre variante de garnissage: celui-ci est constitué par des nappes de fibres feutrées 14, maintenues autour de l'arbre central par des bras supérieurs 15 et inférieurs 16 fixés sur ledit arbre. En l'exemple, quatre nappes sont prévues, couvrant chacune la demi-section longitudinale de l'enceinte. Un nombre différent de nappes peut bien entendu être prévu, le rapport du volume de matière au volume utile de l'enceinte étant ajusté comme précédemment pour être inférieur à 20%. Dans les exemples 1, 2 et 3, ce rapport était de 2%.

La figure 5 présente une variante du cas précédent, dans laquelle deux nappes 17 sont prévues et sont constituées par des fibres tissées.

Exemple 1

Dans cet exemple, on a utilisé un garnissage formé de nappes de feutre, agencées conformément à la figure 4.

Les caractéristiques du feutre étaient les suivantes:

matériau: feutre de polyester;
diamètre de fibres: 30 microns;
hauteur de chaque nappe: 20 cm;
largeur de chaque nappe: 25 mm;
épaisseur: 10 millimètres;
coefficient de vide spécifique de chaque nappe: 0,96;
coefficient de vide de l'ensemble du garnissage rapporté au volume utile de l'enceinte: 0,98.

L'enceinte présente un diamètre de 5 cm, une hauteur utile de 20 cm et une hauteur totale de 30 cm.

L'émulsion traitée dans cet exemple est une émulsion de type secondaire, de kérosène dispersé dans de l'eau et présente un spectre granulométrique relativement large compris entre 2 et 40 microns; elle contient des matières en suspension de type bentonite, ayant un diamètre de particules inférieur à 50 microns. La concentration d'entrée en hydrocarbures est de 330 mg/l et la concentration de matières en suspension est de l'ordre de 200 mg/l.

La vitesse de rotation du garnissage de feutre était de 200 tours/mn, correspondant à une vitesse moyenne tangentielle de 0,26 m/s (vitesse à mi-rayon). La vitesse axiale d'écoulement de l'émulsion dans l'enceinte de coalescence était de 0,1 cm/s. Le rapport de la vitesse moyenne tangentielle du garnissage à la vitesse axiale d'écoulement est donc de l'ordre de 260.

Les analyses effectuées sur l'effluent d'entrée et sur la phase aqueuse de sortie ont consisté à mesurer la demande totale en oxygène après passage aux ultrasons.

Ces analyses ont montré que le rendement de séparation obtenu était de l'ordre de 98,5%, ce qui représente une concentration résiduelle moyenne en hydrocarbures de 5 mg/l dans la phase aqueuse. Cet effluent peut être rejeté sans constituer une nuisance, directement à la sortie du séparateur. Le fonctionnement du dispositif est demeuré stable au cours du temps, les matières en suspension se purgeant au fur et à mesure et étant entraînées par la phase aqueuse; aucune tendance au colmatage n'a été observée.

Une étude granulométrique de l'eau résiduelle (effectuée sur un compteur de particules du type "Coultronics") a montré que toutes les gouttelettes d'hydrocarbures de diamètre supérieur à 10 microns étaient éliminées (avec un rendement de 100%) et que les gouttelettes de diamètre de l'ordre de 5 microns étaient éliminées quant à elles avec un rendement de 80%.

Ce dispositif est donc un excellent séparateur d'émulsion secondaire ou d'émulsion mixte.

### Exemple 2

Cet essai est identique au précédent, à l'exception de la vitesse axiale d'écoulement de l'émulsion, qui a été réglée à une valeur beaucoup plus élevée: de 0,3 cm/s. Le rapport de la vitesse moyenne tangentielle du garnissage à la vitesse d'écoulement de l'émulsion est alors de 87. Dans ce cas, le rendement global moyen a légèrement diminué et est de l'ordre de 96,4%, la concentration résiduelle moyenne étant voisine de 12 mg/l.

On constate donc que le rendement est d'autant meilleur que le rapport de la vitesse tangentielle du garnissage à la vitesse d'écoulement est grand. Le rendement reste toutefois très élevé pour des rapports supérieurs à 150.

Un essai non quantifié a permis de constater que si la vitesse de rotation augmentait de façon trop importante, le rendement de coalescence des grosses gouttes (de diamètre supérieur à 30 microns) chutait notablement en raison du phénomène de refractionnement sus-évoqué. En pratique, l'on ajustera le rapport de la vitesse moyenne du garnissage à la vitesse d'écoulement de l'émulsion entre 150 et 300.

### Exemple 3

Cet exemple est identique à l'exemple 1, à l'exception de la vitesse de rotation du garnissage qui a été ajustée à une valeur plus faible: 105 tours/mn. Cette vitesse correspond à un rapport de la vitesse moyenne de garnissage à la vitesse d'écoulement de l'émulsion égale 137.

Quoique satisfaisante, l'efficacité de séparation est moindre qu'à l'exemple 1, le rendement étant de 97,6%.

### Exemple 4

Cet exemple est mis en oeuvre au moyen de fibres rattachées à un arbre central conformément aux figures 1 et 2, pour former un goupillon en forme de spirale.

Les caractéristiques du garnissage étaient les suivantes:
matériau: polyamide;
diamètre de fibres: 0,1 mm;
spires enroulées de façon jointive sur une hauteur de 20 cm;
longueur de chaque fibre: 2,5 cm;
coefficient de vide du garnissage par rapport au volume utile de l'enceinte: 83%.

L'émulsion traitée dans cet exemple était la même qu'à l'exemple 1 et contenait les mêmes matières en suspension. La vitesse de rotation de l'arbre central était ajustée à 200 tours/min, la vitesse axiale d'écoulement de l'émulsion étant de 0,1 cm/s. Le rapport de la vitesse moyenne de rotation du garnissage à la vitesse axiale d'écoulement est ainsi de l'ordre de 260.

Les analyses effectuées montrent que le rendement de séparation est dans ce cas de l'ordre de 99,5%, ce qui représente une concentration résiduelle moyenne en hydrocarbures de 1,7 mg/l. Le fonctionnement du dispositif demeure stable au cours du temps, les matières en suspension se purgeant au fur et à mesure et étant entraînées par la phase aqueuse; aucune tendance au colmatage n'a été observée.

L'étude granulométrique de l'eau résiduelle a montré que toutes les gouttelettes d'hydrocarbures de diamètre supérieur à 10 microns étaient éliminées avec un rendement de 100% et que les gouttelettes de diamètre de l'ordre de 5 microns étaient éliminées quant à elles avec un rendement de 99%.

Ce dispositif est donc un remarquable séparateur d'émulsion secondaire ou d'émulsion mixte.

### Exemple 5

Cet exemple est identique à l'exemple 4, mais avec une vitesse d'écoulement de l'émulsion beaucoup plus élevée de 0,5 cm/s correspondant à un rapport de la vitesse tangentielle moyenne des fibres à la vitesse axiale d'écoulement égal à 52.

Le rendement global moyen obtenu est de l'ordre de 97,6%. Ce rendement, quoique légèrement inférieur à celui ce l'exemple précédent, demeure remarquable.

### Exemple 6

Cet exemple est identique à l'exemple 4, mais l'émulsion à traiter est une émulsion beaucoup plus chargée en hydrocarbures ayant une concentration de 1 250 mg/l.

De façon un peu inattendue, le rendement moyen mesuré est alors voisin de 100%, la fuite résiduelle hydrocarbures n'étant pas détectable par les analyses. Ceci démontre que les performances du dispositif proviennent d'une probabilité très élevée de rencontres gouttelettes/gouttelettes ou gouttelettes/garnissage.

Exemple 7

Cet exemple est identique à l'exemple 4, mais les fibres utilisées étaient des fibres de diamètre plus important égal à 0,3 mm, et la vitesse de rotation était de 150 tours/min. correspondant à un rapport de la vitesse tangentielle de déplacement du garnissage à la vitesse axiale d'écoulement de 196. Le coefficient de vide du garnissage était dans ce cas de 0,87.

Le rendement moyen global est de 96,5%, ce qui représente une concentration résiduelle moyenne en hydrocarbure de 11,5 mg/l.

Exemple 8

Cet exemple est identique à l'exemple 4, mais les spires, au lieu d'être jointives, étaient écartées longitudinalement d'un pas de 1 cm le long de l'arbre, la vitesse de rotation de ces dernières étant de 150 tours/mn.

Le coefficient de vide du garnissage était dans ce cas de 0,89.

Le rendement moyen global est de 97,4%, ce qui représente une concentration résiduelle moyenne d'hydrocarbure de 8,6 mg/l.

**Revendications**

1. Procédé de séparation d'une phase dispersée en émulsion ou en suspension dans une phase continue de densité différente, du type consistant à amener l'émulsion à circuler dans une enceinte de coalescence contenant un garnissage à l'état divisé formé par des fibres ou particules et à recueillir séparément la phase coalescée et la phase continue à des niveaux différents de l'enceinte, ledit procédé étant caractérisé en ce que l'on utilise un garnissage (11, 12, 14, 17) à coefficient de vide élevé, présentant un volume propre de particules ou fibres inférieur à environ 20% du volume utile de l'enceinte de coalescence (1) et en ce que l'on met ledit garnissage en mouvement continu par rapport à l'émulsion circulant dans l'enceinte de façon que les particules ou fibres dudit garnissage balayent l'enceinte avec une vitesse moyenne supérieure à la vitesse d'écoulement de l'émulsion dans l'enceinte.

2. Procédé de séparation selon la revendication 1, caractérisé en ce que le garnissage est mis en mouvement dans l'enceinte de façon que la vitesse moyenne des particules ou fibres soit supérieure à environ 100 fois la vitesse d'écoulement de l'émulsion.

3. Procédé de séparation selon la revendication 2, caractérisé en ce que l'on utilise un garnissage formé par des fibres dont le volume propre est compris entre environ 0,5% et 5% du volume utile de l'enceinte, et en ce que l'on met lesdites fibres en mouvement à une vitesse moyenne approximativement comprise entre 150 et 300 fois la vitesse d'écoulement de l'émulsion.

4. Procédé de séparation selon l'une des revendications 1, 2 ou 3, dans lequel on utilise une enceinte (1) s'étendant le long d'un axe, caractérisé en ce que l'émulsion est amenée à circuler parallèlement à l'axe de l'enceinte et en ce que le garnissage est mis en rotation autour de cet axe de façon à balayer le volume utile de ladite enceinte, avec son bord périphérique au contact de ladite enceinte.

5. Procédé de séparation selon l'une des revendications 1, 2, 3 ou 4, dans lequel on utilise un garnissage en un matériau mouillé préférentiellement par la phase dispersée.

6. Procédé selon l'une des revendications 1, 2, 3, 4 ou 5, appliqué à la séparation d'une phase hydrocarbure dispersée en émulsion dans une phase aqueuse continue, dans lequel l'émulsion est amenée à circuler de bas en haut dans l'enceinte de coalescence, le recueil de l'hydrocarbure et de la phase aqueuse étant opéré en partie haute à des niveaux différents.

7. Dispositif de séparation d'une phase dispersée, notamment d'hydrocarbure, en émulsion ou en suspension dans une phase continue de densité différente, notamment aqueuse, en vue de la mise en oeuvre du procédé conforme à l'une des revendications 1 à 6, ce dispositif comprenant une enceinte de coalescence (1) s'étendant le long d'un axe, une entrée d'émulsion (2) située vers une extrémité de l'enceinte, une sortie de phase coalescée (4) et une sortie de phase continue (5), situées vers l'extrémité opposée de l'enceinte à des niveaux différents, un support rotatif (8, 10) associé à l'enceinte de coalescence, des moyens d'entraînement en rotation dudit support (9) et un garnissage (11, 12, 14, 17) formé par des fibres liées à ce support, ledit dispositif étant caractérisé en ce que le garnissage est un garnissage à coefficient de vide élevé, présentant un volume propre de fibre inférieur à environ 20% du volume utile de l'enceinte de coalescence (1), ce garnissage (11, 12) étant formé par une multitude de fibres radiales, chacune liée sur un arbre central (8) s'étendant selon l'axe de l'enceinte, chaque fibre ayant une longueur adaptée pour balayer la section transversale de l'enceinte au cours de la rotation et pour être au contact de ladite enceinte par son extrémité.

8. Dispositif de séparation selon la revendication 7, caractérisé en ce que les fibres sont enroulées en spirale le long de l'arbre (8) pour former un goupillon (11).

9. Dispositif de séparation selon la revendication 7, caractérisé en ce que les fibres sont rattachées le long d'au moins un support (13) parallèle à une génératrice de l'arbre (8) pour former des brosses linéaires.

10. Dispositif de séparation d'une phase dispersée, notamment d'hydrocarbure, en émulsion ou en suspension dans une phase continue de densité différente, notamment aqueuse, en vue de la mise en oeuvre du procédé conforme à l'une des revendications 1 à 6, ce dispositif comprenant une enceinte de coalescence (1) s'étendant le long d'un axe, une entrée d'émulsion (2) située vers une extrémité de l'enceinte, une sortie de phase coalescée (4) et une sortie de phase continue (5), situées vers l'extrémité opposée de l'enceinte à des niveaux différents, un support rotatif (8, 10) associé à l'enceinte de coalescence, des moyens d'entraînement en rotation dudit support (9) et un garnissage (11, 12, 14, 17) formé par des fibres liées à ce support, ledit dispositif étant caractérisé en ce que le garnissage est un garnissage à coefficient de vide élevé, présentant un volume propre de fibre inférieur à environ 20% du volume utile de l'enceinte de coalescence (1), ce garnissage (14, 17) étant formé par au moins une nappe de fibres tissées ou feutrées, maintenue autour d'un arbre central par des bras supérieurs et inférieurs (15, 16), lesdites nappes étant de surface adaptée pour couvrir au moins la demi-section longitudinale de l'enceinte.

11. Dispositif de séparation selon l'une des revendications 7, 8, 9 ou 10, caractérisé en ce que le garnissage comprend un volume propre de fibre compris entre environ 0,5% et 5% du volume utile de l'enceinte.

12. Dispositif de séparation selon l'une des revendications 7, 8, 9, 10 ou 11, caractérisé en ce que les moyens d'entraînement (9) sont adaptés pour permettre d'assurer une rotation continue du support telle que:

$$\frac{750}{D} \leqslant N \leqslant \frac{1\,500}{D} \ ,$$

où N est la vitesse de rotation exprimée en tours/min. et D le diamètre moyen de l'enceinte exprimé en cm.

13. Dispositif selon l'une des revendications 7 à 12, caractérisé en ce que le garnissage est réalisé à partir de fibres de diamètre compris entre 0,1 et 0,5 mm.

14. Dispositif selon l'une des revendications 7 à 13 pour la séparation d'un hydrocarbure dispersé dans de l'eau, dans lequel les fibres sont en un matériau du groupe suivant: polypropylène, polyéthylène, polyamide, polytétrafluoroéthylène.

**Patentansprüche**

1. Verfahren zur Anscheidung einer dispersen Phase in Emulsion bzw. schwebend in einer kontinuierlichen Phase anderer Dichte, des Typs darin besteht, die Emulsion in einem Koaleszenzraum, der eine durch Fasern bzw. Teilchen gebildete Füllung im geteilten Zustand enthält, kreisen zu lassen und die koalierte Phase und die kontinuierliche Phase getrennt auf verschiedenen Ebenen aufzufangen, dadurch gekennzeichnet, daß eine Füllung (11, 12, 14, 17) mit hohem Vakuumkoeffizienten eingesetzt wird, die ein Eigenvolumen an Fasern bzw. Teilchen aufweist, das etwa 20% des nutzbaren Volumens des Koaleszenzraumes (1) unterschreitet, und daß die Füllung in eine kontinuierliche Bewegung gegenüber der im Raum kreisenden Emulsion versetzt wird, derart daß die Teilchen bzw. Fasern der Füllung den Raum mit einer mittleren Geschwindigkeit bestreichen, die größer ist als die Durchflußgeschwindigkeit der Emulsion im Raum.

2. Anscheidungsverfahren nach Anspruch 1, dadurch gekennzeichnet, daß die Füllung im Raum in Bewegung gesetzt wird, derart, daß die mittlere Geschwindigkeit der Teilchen bzw. Fasern etwa 100 Mal größer ist als die Durchflußgeschwindigkeit der Emulsion ist.

3. Anscheidungsverfahren nach Anspruch 2, dadurch gekennzeichnet, daß eine Füllung eingesetzt wird, die aus Fasern besteht, deren Eigenvolumen zwischen 0,5% und 5% des nutzbaren Volumens des Raumes liegt, und daß die Fasern mit einer mittleren Geschwindigkeit, die etwa 150 bis 300 Mal größer als die Durchflußgeschwindigkeit der Emulsion ist, in Bewegung gesetzt werden.

4. Anscheidungsverfahren nach einem der Ansprüche 1, 2 oder 3, bei dem ein sich an einer Achse erstreckender Raum (1) eingesetzt wird, dadurch gekennzeichnet, daß die Emulsion parallel zur Achse des Raumes kreisen gelassen wird, und daß die Füllung um diese Achse in Drehung gesetzt wird, derart, daß sie das nutzbare Volumen des Raumes, mit ihrem peripheren Rand in Berührung mit dem vorerwähnten Raum, bestreicht.

5. Anscheidungsverfahren nach einem der Ansprüche 1, 2, 3 oder 4, bei dem eine Füllung aus einem vorzugsweise von der dispersen Phase benetzten Material eingesetzt wird.

6. Verfahren nach einem der Ansprüche 1, 2, 3, 4 oder 5, angewendet auf die Anscheidung einer dispersen Kohlenwasserstoffenphase, in Emulsion in einer wäßrigen kontinuierlichen Phase, bei dem die Emulsion von oben nach unten im Koaleszenzraum kreisen gelassen wird, wobei das Auffangen des Kohlenwasserstoffs und der wäßrigen Phase im oberen Teil auf unterschiedlichen Ebenen vorgenommen wird.

7. Vorrichtung zur Anscheidung einer dispersen Phase, insbesondere aus Kohlenwasserstoff, in Emulsion bzw. schwebend in einer kontinuierlichen, insbesondere wäßrigen Phase anderer Dichte, im Hinblick auf die Durchführung des Verfahrens nach einem der Ansprüche 1 bis 6, die folgendes umfaßt: einen an sich einer Achse erstreckenden Koaleszenzraum (1), einen an einem Ende des Raumes zugeordneten Emulsionseinlauf (2), einen Auslauf (4) für die koalierte Phase und einen Auslauf (5) für die kontinuierliche Phase, die am entgegengesetzten Ende des Raumes auf unterschiedlichen Ebenen angeordnet sind, eine mit dem Koaleszenzraum zusammenwirkende, drehbare Halterung (8, 10), Mittel (9) für den drehenden Antrieb der Halterung und eine Füllung (11, 12, 14, 17), die aus Fasern besteht, die mit dieser Halterung verbunden sind, Vorrichtung dadurch gekennzeichnet, daß die Füllung eine Füllung mit hohem Vakuumkoeffizienten ist, die ein Eigenvolumen an Fasern aufzeigt, das etwa 20% des nutzbaren Volumens des Koaleszenzraumes (1) unterschreitet, wobei diese Füllung (11, 12) aus einer Vielzahl radialer Fasern besteht, die jede mit einer sich entlang der Achse des Raumes erstreckenden mittigen Welle (8) verbunden sind, wobei jede Faser eine passende Länge hat, um den Querschnitt des Raumes bei der Umdrehung zu bestreichen und um mit ihrem Ende den vorerwähnten Raum zu berühren.

8. Anscheidungsvorrichtung nach Anspruch 7, dadurch gekennzeichnet, daß die Fasern an der Welle (8) spiralförmig umgewickelt sind, um so eine Flaschenbürste (11) zu bilden.

9. Anscheidungsvorrichtung nach Anspruch 7, dadurch gekennzeichnet, daß die Fasern wenigstens an einer Halterung (13) entlang befestigt sind, die parallel zu einer Generatrix der Welle (8) verläuft, um geradlinige Bürsten zu bilden.

10. Vorrichtung zur Anscheidung einer dispersen Phase, insbesondere aus Kohlenwasserstoff, in Emulsion bzw. schwebend in einer kontinuierlichen, insbesondere wäßrigen Phase anderer Dichte, im Hinblick auf die Durchführung des Verfahrens nach einem der Ansprüche 1 bis 6, die folgendes umfaßt: einen sich an einer Achse erstreckenden Koaleszenzraum (1), einen an einem Ende des Raumes gelegenen Emulsionseinlauf (2), einen Auslauf (4) für die koalierte Phase und einen Auslauf (5) für die kontinuierliche Phase, die am entgegengesetzten Ende des Raumes auf unterschiedlichen Ebenen angeordnet sind, eine mit dem Koaleszenzraum zusammenwirkende, drehbare Halterung (8, 10), Mittel (9) für den drehenden Antrieb der Halterung und eine Füllung (11, 12, 14, 17), die aus Fasern besteht, die mit dieser Halterung verbunden sind, Vorrichtung dadurch gekennzeichnet, daß die Füllung eine Füllung mit hohem Vakuumkoeffizienten ist, die ein Eigenvolumen an Fasern aufzeigt, das etwa 20% des Arbeitsvolumens des Koaleszenzraumes (1) unterschreitet, wobei diese Füllung (14, 17) aus mindestens einem Vlies gewobener oder verfilzter Fasern besteht, das über obere und untere Arme (15, 16) um eine mittige Welle gehalten wird, wobei die Vliese eine passende Fläche aufzeigen, um mindestens den halben Längsschnitt des Raumes decken zu können.

11. Anscheidungsvorrichtung nach einem der Ansprüche 7, 8, 9 oder 10, dadurch gekennzeichnet, daß die Füllung ein Eigenvolumen an Fasern umfaßt, das zwischen 0,5% und 5% des nutzbaren Volumens des Raumes liegt.

12. Anscheidungsvorrichtung nach einem der Ansprüche 7, 8, 9, 10 oder 11, dadurch gekennzeichnet, daß die Antriebsmittel (9) so gestaltet sind, daß sie ein kontinuierliches Drehen der Halterung zu ermöglichen, derart daß:

$$\frac{750}{D} \leqslant N \leqslant \frac{1\ 500}{D} ,$$

wo N die Umdrehungsgeschwindigkeit in U/min und D der mittlere Durchmesser des Raumes in cm ist.

13. Vorrichtung nach einem der Ansprüche 7 bis 12, dadurch gekennzeichnet, daß die Füllung aus Fasern mit einem Durchmesser von 0,1 bis 0,5 mm hergestellt wird.

14. Vorrichtung nach einem der Ansprüche 7 bis 13 zur Anscheidung eines in Wasser dispergierten Kohlenwasserstoff, bei dem die Fasern aus einem Material der folgenden Gruppe bestehen: Polypropylen, Polyäthylen, Polyamid, Polytetrafluoräthylen.

**Claims**

1. A method for separating a phase dispersed in emulsion or suspended in a continuous phase or different density, consisting in circulating the emulsion in a coalescer enclosure that contains a lining in divided state consisting of fibres or particles, and in collecting the coalesced phase and the continuous phase separately at different levels of the enclosure, said method being characterised in that a lining (11, 12, 14, 17) of high vacuum coefficient is being used, that displays an individual volume of fibres or particles smaller than approximately 20% of the available volume of the coalescer enclosure (1) and in that said lining is set in continuous motion with respect to the emulsion circulating through the enclosure so that the particles or fibres of said lining sweep the enclosure with an average speed higher than the throughflow speed of the emulsion in the enclosure.

2. A separating method according to claim 1, characterised in that the lining is set in motion in the enclosure so that the average speed of the particles or fibres is approximately 100 times greater than the throughflow speed of the emulsion.

3. A separating method according to claim 2, characterised in that a lining is used, consisting of fibres with an individual volume ranging from approximately 0,5% to 5% of the available volume of the enclosure, and in that said fibres are set in motion at an average speed approximately ranging from 150 to 300 times the throughflow speed of the emulsion.

4. A separating method according to one of the claims 1, 2 or 3, wherein an enclosure (1) extending along an axis is being used, characterised in that the emulsion is circulated in parallel with the axis of the enclosure and in that the lining is rotated around this axis so as to sweep the available volume of said enclosure, with its peripheral edge in contact with said enclosure.

5. A separating method according to one of the claims 1, 2, 3 or 4, where a lining consisting of a material moistened preferably by the dispersed phase is being used.

6. A method according to one of the claims 1, 2, 3, 4 or 5, applied to the separation of a hydrocarbon phase dispersed in emulsion in a continuous aqueous phase, where the emulsion is circulated from bottom to top in the coalescer enclosure, with the collection of the hydrocarbon and of the aqueous phase being achieved in the upper section at different levels.

7. A device for separating a dispersed phase, especially of hydrocarbon, in emulsion or suspended in a continuous, especially aqueous phase of different density, with a view to implementing the method according to one of the claims 1 to 6, said device comprising a coalescer enclosure (1) that extends along an axis, an emulsion inlet (2) located towards an end of the enclosure, an outlet (4) for the coalesced phase and an outlet (5) for the continuous phase, both situated towards the opposite end of the enclosure at different levels, a rotary holder (8, 10) co-operating with the coalescer enclosure, means (9) for transmitting a rotary motion to said holder and a lining (11, 12, 14, 17) that consists of fibres linked to this holder, said device being characterised in that the lining is a lining of high vacuum coefficient, displaying an individual volume of fibres smaller than approximately 20% of the available volume of the coalescer enclosure (1), with this lining (11, 12) consisting of a multitude of radial fibres, each of which is linked to a central shaft (8) that extends along the axis of the enclosure, each fibre displaying an appropriate length so as to sweep the cross section of the enclosure during the rotary motion and to be in contact with said enclosure via its end.

8. A separating device according to claim 7, characterised in that the fibres are wound in spirals around the shaft (8) so as to form a bottle brush (11).

9. A separating device according to claim 7, characterised in that the fibres are secured along, at least, one holder (13) in parallel with a generating line of the shaft (8) so as to form linear brushes.

10. A device for separating a dispersed phase, especially of hydrocarbon, in emulsion or suspended in a continuous, especially aqueous phase of different density, with a view to implementing the method according to one of the claims 1 to 6, said device comprising a coalescer enclosure (1) that extends along an axis, an emulsion inlet (2) located towards one end of the enclosure, an outlet (4) for the coalesced phase and an outlet (5) for the continuous phase, both located towards the opposite end of the enclosure at different levels, a rotary holder (8, 10) co-operating with the coalescer enclosure, means (9) for transmitting a rotary motion to said holder and a lining (11, 12, 14, 17) that consists of fibres linked to this holder, said device being characterised in that the lining is a lining of high vacuum coefficient, displaying an individual volume of fibres smaller than approximately 20% of the available volume of the coalescer enclosure (1), with this lining (14, 17) consisting of at least one sheet of woven or felted fibres, secured around a central shaft through upper and lower arms (15, 16), with said sheets having a length appropriate so as to cover at least half the lengthwise section of the enclosure.

11. A separating device according to one of the claims 7, 8, 9 or 10, characterised in that the lining comprises an own fibre volume ranging from 0,5% to 5% of the available volume of the enclosure.

12. A separating device according to one of the claims 7, 8, 9, 10 or 11, characterised in that the driving means (9) are so adapted as to allow for ensuring a continuous rotary motion of the holder such as:

$$\frac{750}{D} \leqslant N \leqslant \frac{1\ 500}{D}\ ,$$

where N is the rotating speed in rpm and D is the mean diameter of the enclosure in cm.

13. A device according to one of the claims 7 to 12, characterised in that the lining is made of fibres of a diameter ranging from 0,1 to 0,5 mm.

14. A device according to one of the claims 7 to 13 for separating a hydrocarbon dispersed in water, where the fibres consist of a material of the following group: polypropylene, polyethylene, polyamide, polytetrafluorethylene.

Fig. 1

Fig. 2

Fig. 3

Fig.  4

Fig.  5